# EUROPEAN PATENT APPLICATION

(11) **EP 1 091 570 A2**
(43) Date of publication of application: **11.04.2001**
(21) Application number: 00306664.4
(22) Date of filing: 04.08.2000
(51) Int. Cl.: H04N 5/00

(54) **Data recording/reproducing apparatus having format converting function and method thereof**

(30) Priority: 05.08.1999 JP 22265899
(71) Applicant: SONY CORPORATION, Tokyo 141 (JP)
(72) Inventor: Shiga, Tomohisa c/o Sony Corporation, Shinagawa-ku, Tokyo 141 (JP)
(74) Representative: Turner, James Arthur

(57) **Abstract**

According to the present invention, a broadcast data recording/reproducing apparatus having a format converting function is presented. Namely the broadcast data recording/reproducing apparatus for recording/reproducing broadcast data on a hard disc comprises: a hard disc device for recording/reproducing the broadcast data on the hard disc; a plurality of input/output processor for supplying input broadcast data within an allocated time slot to the hard disc device and for supplying reproduced data from the hard disc device within the time slot to a control terminal; and a format converter interposed between the plurality of input/output processor and the hard disc device for converting the data format between a first data format for the data recorded on the hard disc and a second data format in the control terminal.

## Description

This invention relates to a data recording/reproducing apparatus having a format converting function and method thereof.

In recent years, information offer uses many channels by diffusion of CATV (Cable Television) or the like. Accordingly different from conventional VTR (Video Tape Recorder), an audio/video data recording/reproducing apparatus is highly requested to record/reproduce plural audio/video data simultaneously reproduced from single recording/reproducing apparatus in real time, and further to record while reproducing audio/video data. In order to satisfy this demand, a recording/reproducing apparatus such as audio/video server (AV Server or Video Server) apparatus using random accessible recording medium is introduced. Such server apparatus may employ hard disc drives (HD Drives).

As for the video server installed in broadcasting stations, demand for picture quality and audio quality is generally very high. Accordingly it is necessary for the AV server to have very large recording capacity in order to record long time AV data of high bit rate. Such AV server is achieved by applying the data recording/reproducing apparatus containing a plurality of hard disc devices for recording/reproducing plural AV data for concurrent processing. In this case, if parity data are recorded at the data recording/reproducing apparatus, its reliability is kept high even the case where some of the HD devices break down by any chance.

In a case where the number of channels required by broadcast contents and conformation of the program required by broadcasting stations are different, a multi channel video server can accept various use conformation. The multi channel video server can record plural audio/video subject matter data for broadcasting in dispersion, and can execute simultaneous broadcasting the data of the plural audio/video subject matter. The video server is constructed as either a VOD (Video On Demand) system or a NVOD (Near Video On Demand) by reproducing the data of the same audio/video subject matter in different times for multi channel broadcasting.

In an article ("A case for Redundant Arrays of Inexpensive Discs (RAID)", ACMSIGMOND Conference, Chicago, III , June 1-3, 1988) announced in 1988 by Patterson, a hard disc system is proposed. In a data recording/reproducing apparatus used for such video server, the RAID (Redundant Arrays of Inexpensive Discs) technique that uses hard disc drives is used.

The RAID system is classed into five types from the RAID-1 to the RAID-5 according to the above article. The RAID-1 is a system in which the same content is written in two HDDs (Hard Disc Drive). In the RAID-3, input data is divided into a constant length, and thud divided data is recorded in plural HDDs. The parity data that are exclusive or of data block corresponding to each HDD are generated simultaneously, and the parity data are written in other HDD in this RAID-3. Furthermore in the RAID-5, the input data are divided into larger unit of data (Block) and the one divided data are recorded in one HDD as a data block. At the same time a result (Parity Data) of exclusive or of data block corresponding to each HDD are recorded in other HDD as a parity block. The other RAID system can be referred to the above article.

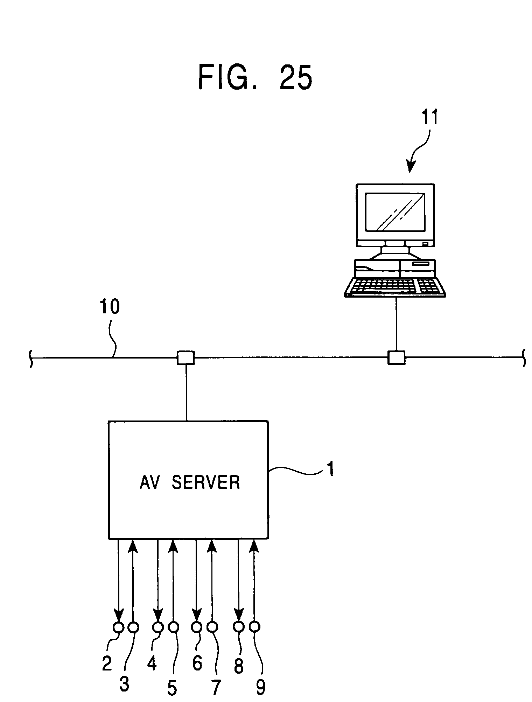

Fig. 25 shows one example of the AV server system, in which an AV server 1 equivalent to the data recording/reproducing apparatus is operated through a network 10 such as the Ethernet by a terminal 11 such as a personal computer or a workstation. The AV server 1 uses plural input-output channels (2, 4, 6 and 8 for input channel and 3, 5, 7 and 9 for output channel) selectively for recording the AV data. Furthermore, designated AV data are reproduced, previewed at a monitor device (not shown) and is output for television broadcasting.

The AV server 1 is installed a plurality of hard discs and can access by a file unit. In addition, an application program software (such as called [CG-AP]) for a CG (Computer Graphics) is installed in the terminal 11, so that the data of the broadcast subject matter recorded in the AV server 1 can be accessed using the [CG-AP] for necessary editing.

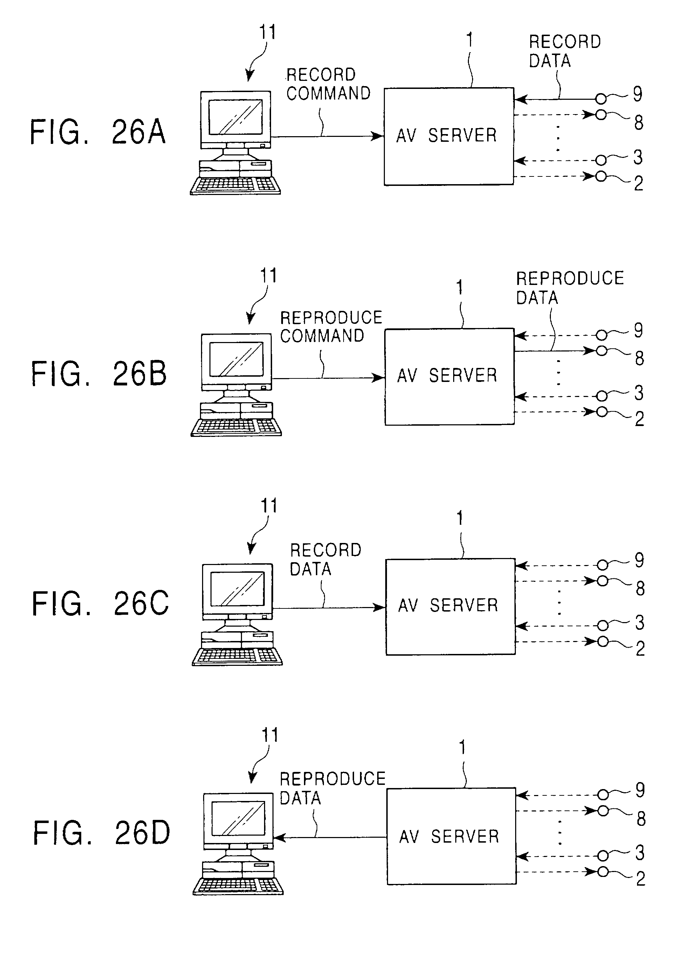

Fig. 26 shows a conceptual diagram showing four cases of record and reproduce in the AV server 1. Two cases as shown in Fig. 26A and Fig. 26B are the cases where recording operation or reproducing operation are done in response to a command from the terminal 11. In other words normal record or reproduce is done by selective use of the input-output channels. In this case, the terminal 11 only assigns incidence of command, assignment of the input-output channels and designation of a file, and does not actually access to the broadcast subject matter. On the other hand two cases as shown in Fig. 26C and Fig. 26D are the cases where the broadcast subject matter are exchanged between the terminal 11 and the AV server 1. For example, if the [CG-AP] mentioned above is installed in the terminal 11, arbitrary broadcast subject matter in the AV server 1 can be accessed from this terminal 11 for necessary CG editing.

However, in the conventional AV server 1, the form (Format) of the record data is the form for the broadcast subject matter, and this format is different from a display format in the terminal 11. Therefore the terminal 11 has to equip with a resource (such as a proper video board or a driver software) for format conversion. In that event there is problems to lose multi usability of the terminal 11.

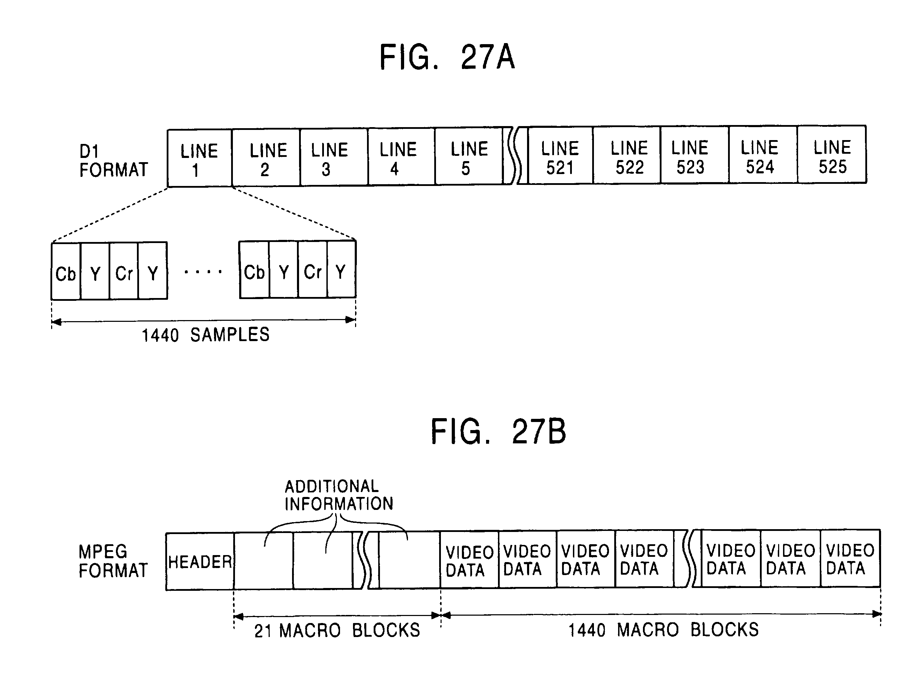

Fig. 27 shows data allocation in the D1 format and the MPEG format of one video frame. Fig. 26A shows non-compression format structure of base band record called the D1 format and Fig. 26B shows the MPEG format that compresses the data of the D1 format. The D1 format consists of a block corresponding to the number of horizontal lines (525 lines in the figure) for one video frame. Each block stores a plurality of picture element information consisting of two color difference signals (Cb, Cr) and a luminance signal (Y) (1440 samples in the Fig. 26A).

The D1 format maintains full audio and video information of the broadcast subject matter. Accordingly, in the D1 format, good picture quality is provided, but there is the defect that a file size becomes very large. In addition, the MPEG format is a compression format on the basis of the international standard of moving video coding (MPEG : Moving Picture Experts Group). The coding technology of the MPEG format is non-reciprocal coding (a part of information is lost in the process of compression), and accordingly the picture quality deteriorates to some extent. However, according to the coding technique of the MPEG format, file size becomes largely small so that in particular this format is suitable for the AV server 1, where the record capacity is limited. The MPEG format comprises a header to maintain information of whole frame such as broadcast type (NTSC, PAL or SECAM system) of the broadcast subject matter and bit rate, plural (1440 in the figure) macro blocks for additional information maintaining additional information such as a time code and plural (21 in the figure) video data macro blocks maintaining compressed picture element information.

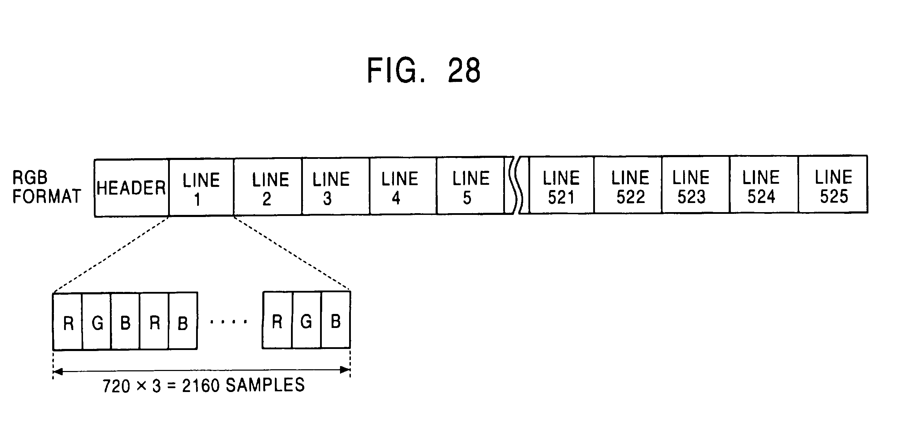

On the other hand Fig. 28 shows data allocation in the RGB format that is the format of the terminal 11 and comprises of a header to maintain size information of video and blocks corresponding to the number of lines of one video frame (525 lines in the figure). Each block stores plural sets (720 sets in the figure) of picture elements in which each set has picture element of R (Red), G (Green) and B (Blue).

Generally a general-purpose personal computer and a workstation can just treat video data of the RGB format. However, the general-purpose personal computer and the workstation cannot perform the video processing such as the CG editing or even monitoring on a display if the video data of, for example, the above-mentioned D1 format (or MPEG compressed D1 format) is supplied unless the driver software and the video board for television broadcasting are provided. Besides, when the video data of the MPEG format is given, in addition to the driver software and the video board for television broadcasting, means for the MPEG coding/decoding becomes necessary. Accordingly, as for conventional AV server 1, problems to lose multi usability of the terminal 11 are not avoided when used as a video file server.

Various respective aspects and features of the invention are defined in the appended claims.

According to the present invention, a data recording/reproducing apparatus having format converting function is presented. Namely a data recording/reproducing apparatus for recording/reproducing data on random-accessible recording medium comprises: recording/reproducing device for recording/reproducing data on random-accessible recording medium; a plurality of input/output processing means for supplying input data within an allocated time slot to the recording/reproducing device and for supplying reproduced data from the recording/reproducing device within the time slot to an external device; and format conversion means interposed between the plurality of input/output processing means and recording/reproducing device for converting data format between a first data format for the data recorded on the random-accessible recording medium and a second data format in the external device.

In the data recording/reproducing apparatus, the format conversion means comprises: rewritable memory means for storing a conversion program for converting data format between the first data format and the second data format; conversion processing means for executing the conversion program; and control means for controlling the supply of the conversion program stored in the rewritable memory means to the conversion processing means.

Further in the data recording/reproducing apparatus of this invention, the format conversion means is connected to a TCP/IP network to which a control terminal means is connected as the external device.

Further in the data recording/reproducing apparatus of this invention, the input/output processing means extracts video/audio data out of the data transferred in the SDI format from the external device and thus extracted video/audio data is supplied to the recording/reproducing device within the time slot.

Further in the data recording/reproducing apparatus of this invention, at least one of the plurality of input/output processing means comprises compression means for compressing the extracted video/audio data.

This invention is also related to a method for recording/reproducing data on random-accessible recording medium by a recording/reproducing device within the allocated time slot, comprises the steps of: step for supplying through a network a control signal for reproduce command for the data recorded on the random-accessible recording medium; step for reproducing the data on the random-accessible recording medium within the time slot based on the control signal for reproduce command; step for converting format of the reproduced data at the reproducing step; and step for transferring format converted data to the network.

Further in the method for recording/reproducing data on random-accessible recording medium of this invention, the network is a TCP/IP network to which a terminal is connected, and the data obtained at the converting step is acceptable format by the terminal.

Further in the method for recording/reproducing data on random-accessible recording medium by a recording/reproducing device within the allocated time slot, comprises the steps of: step for supplying data transferred through a network; step for converting format of the supplied data to a format suitable for recording on the random-accessible recording medium; and step for supplying format-converted data at the converting step to the recording/reproducing device within the allocated time slot.

Further in the method for recording/reproducing data of this invention, the network is a TCP/IP network to which a terminal is connected, and the data is supplied from the terminal in a form of predetermined format.

For example, in embodiments of this invention, data of broadcast subject matter of television broadcasting is recorded, and the record data is reproduced in a file unit by the data recording/reproducing apparatus of the present invention. In particular embodiments of this invention relate to the data recording/reproducing apparatus and method in which the reproduced data is able to be accessed by virtue of format converting function from a terminal such as a personal computer or a workstation connected to a network.

The invention will now be described by way of example with reference to the accompanying drawings, throughout which like parts are referred to by like references, and in which:
Fig 1. shows a block diagram of one example of an AV server;
Figs. 2A to 2D show charts for explaining a file system;
Fig. 3 shows a hardware construction of a file system board;
Fig. 4 shows a hierarchical software structure of the file system board;
Fig. 5 shows a hardware construction of a network board;
Fig. 6 shows a hierarchical software structure of the network board;
Fig. 7 shows a hierarchical software structure of a DSP on the network board;
Fig. 8 shows a hardware construction of a data control board for the MPEG format;
Fig. 9 shows a hardware construction of a data control board for the D1 format;
Fig. 10 shows a hierarchical software structure common to respective data control board for the MPEG format and the D1 format;
Fig. 11 shows a flowchart (1/2) for a file system processing;
Fig. 12 shows a flowchart (2/2) for the file system processing;
Fig. 13 shows a flowchart for a Telnet server processing;
Fig. 14 shows a flowchart for a command interpreter processing;
Fig. 15 shows a flowchart for a reproduce processing in the command interpreter processing;
Fig. 16 shows a flowchart for a record processing in the command interpreter processing;
Fig. 17 shows a flowchart of a FTP server processing;
Fig. 18 shows a flowchart for a read processing in the FTP server processing;
Fig. 19 shows a flowchart for a write processing in the FTP server processing;
Fig. 20 shows a flowchart for a download processing executed in the DSP on the network board;
Fig. 21 shows a time run chart for data record;
Fig. 22 shows a time run chart for data reproduce;
Fig. 23 shows a time run chart for data write;
Fig. 24 shows a time run chart for data read;
Fig. 25 shows one example diagram of a server system;
Figs. 26A to 26D show conceptual diagrams showing four cases of record and reproduce in the AV server;
Figs. 27A and 27B show data allocation in the D1 format and the MPEG format; and
Fig. 28 shows data allocation in the RGB format.

One embodiment of the present invention is explained in detail with reference to the attached drawings.

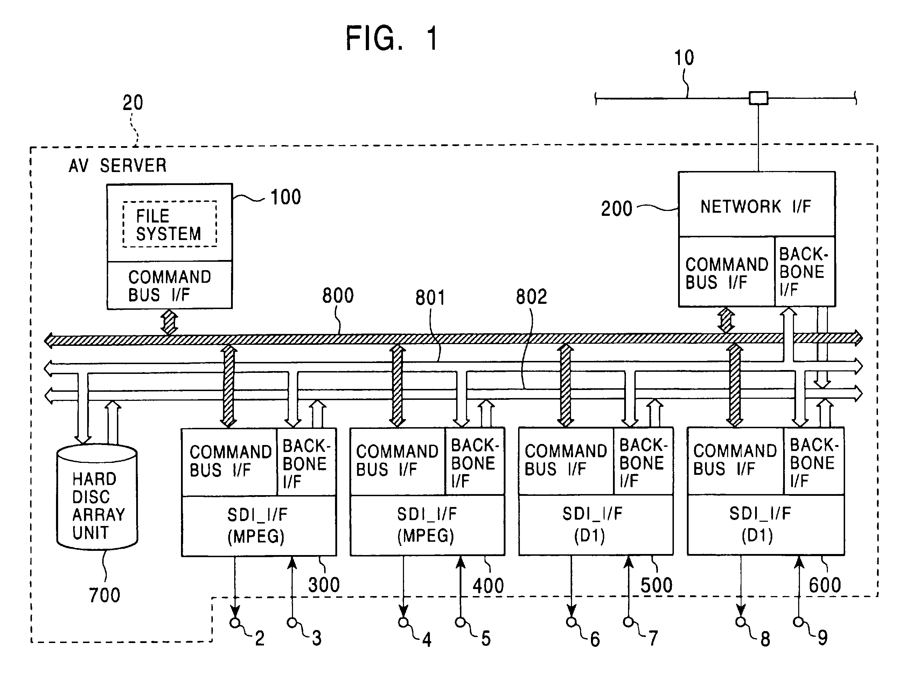

Fig. 1 shows a block diagram of one example of an AV server of the present invention. At reference to a configuration of an AV server system (particularly the network 10 and the terminal 11) is refers to the above-mentioned Fig. 26 except an AV server 20.

In Fig. 1, the AV server 20 has a file system board 100, a network board 200 and two data control boards 300 and 400 for the MPEG format. Furthermore, the AV server 20 has another two data control boards 500 and 600 for the D1 format, a hard disc array unit 700, a command bus 800 and two backbones 801 and 802.

### [File System Board 100]

The file system board 100 has a command bus interface (interface is omitted at "I/F" as follows) 101 and maintains a file system 102 to be explained later. The command bus I/F (Interface) 101 accepts a command from a network board 200 or from data control boards 300, 400, 500 and 600 by way of a command bus 800. Then the command bus I/F 101 transmits a status for the accepted command to each of the network boards through the command bus 800. The file system board 100 executes a processing for the command.

The file system is a structure for managing storage position of a file on a hard disc (the hard disc array unit 700 in the figure). Generally, in a user environment, a file is treated as an information block (or aggregation thereof) having an inherent name and arbitrary length.

However, a file recorded on the hard disc is stored at a block of fixed size (the block called a sector of 128 bytes), and accordingly a user cannot treat the file as it is. In the file system, information of physical file position is converted into a logical file position that a user can treat.

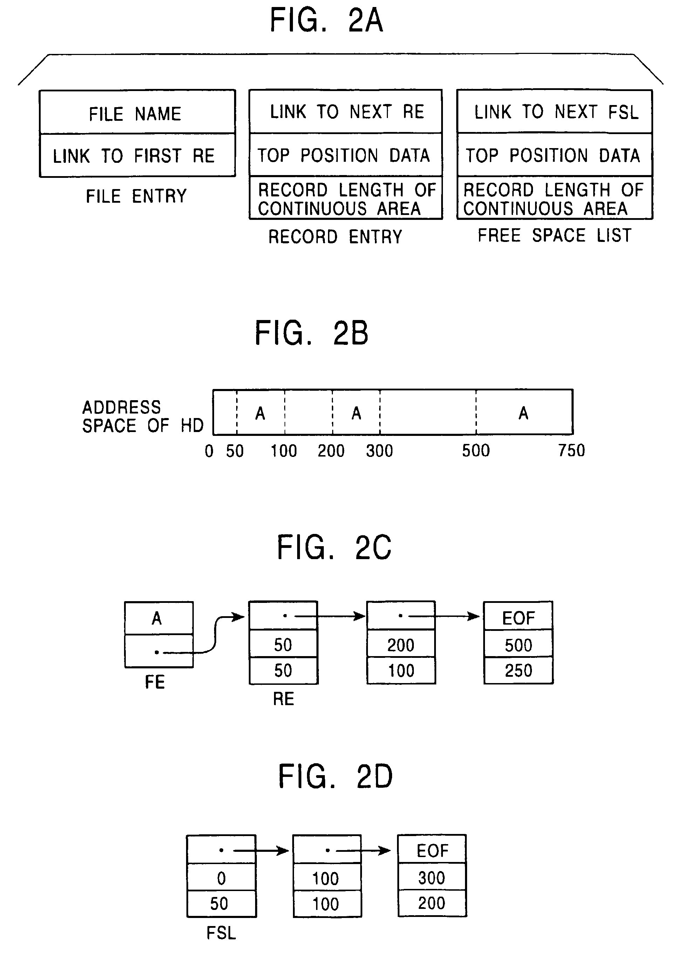

Further the file system used in this embodiment is explained reference to Figs. 2A to 2D. The file system comprises of three kinds of information called a FE (File Entry), a RE (Record Entry) and a FSL (Free Space List). These information are referred to, newly generated or updated their contents whenever the file operation is done. The FE comprises of a file name and a pointer information to a first record entry as shown in Fig.2A, and this FE is made at every file. The RE comprises of top address of the recorded file on the hard disc and a record length of a continuous area and a pointer information to a next RE in order to accept intermittent writing of one file into a plurality of blocks on the hard disc. If there is no pointer information to the next RE, namely the file ends at the RE, an EOF (End of File) is written as a link information to the next RE. The FSL manages no recorded area on the hard disc with a top position data and a consecutive record area.

Next a practical example of the file system is explained with reference to Fig. 2B, Fig.2C and Fig.2D. In a case where a file "A" is recorded on the hard disc (HD) intermittently on the address space of the HD from 50 to 100, from 200 to 300 and from 500 to 750 as shown in Fig. 2B, contents of the FE and the RE become as shown in Fig. 2C.

Namely the file name "A" is stored in the FE and link information to the first RE is stored as a pointer information to the RE that designates the first recorded area. As a top position data of the RE, a value of "50" designating a top address is stored, and a consecutive record length is 100-50 =50 so that a record length of a consecutive area becomes "50". As the file "A" is recorded intermittently on the HD, a link information to next RE, namely a pointer information is stored. As a top position data of a next RE, a value of "200" designating a start address of a continuous area is stored and a value of "100" is stored as a consecutive record length because the data is consecutively recorded by 300-200=100.

Further as the file "A" is stored in the consecutive record area, a pointer information to the next RE is stored. As a top position data of the next RE, a value of "500" designating a start address of a continuous area is stored and a value of "250" is stored as a consecutive record length because data is consecutively recorded by 750-250=500. In this case an "EOF" is stored because there is no link to the next RE.

In an address space as shown in Fig.2B, the FSL is stored as shown in Fig.2D. There are no record areas intermittently from zero to 50, from 100 to 200 and from 300 to 500 as shown in Fig. 2B. Accordingly "zero" is written in at address to show the top position address of the FSL as shown in Fig.2D. Furthermore, the area having no data from this address is 50-0 = 50, and accordingly "50" is stored. In addition, because there is no data, area, a link to the next FSL namely the pointer information is written. To the next FSL, top position data is "100" and the record length is 200-100 =100 so that "100" is stored in the next FSL. As "300" for consecutive top address and the length which is 500-300 =200, namely "200 " are stored in the next FSL. Because the area with no data is finished here, the "EOF" is stored as a link information to the next FSL.

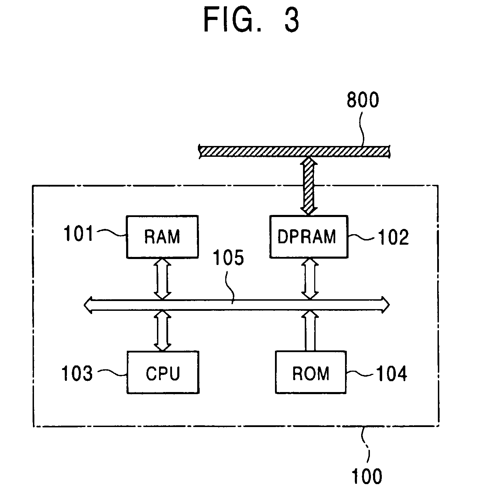

Fig. 3 shows the file system board 100. The file system board 100 comprises a RAM (Random Access Memory) 101 for work area, a DPRAM (Dual Port RAM) 102 for command input/output, a CPU (Central Processing Unit) 103 that executes an OS and an application program software to control operation of the board, a ROM (Read Only Memory) 104 for storing the OS and the application program and an internal bus 105 to connect each part.

The above described file system information is stored in the RAM 101, and executed by the program stored in the ROM 104. When a command designating the record of the file is supplied to the DPRAM 102 through the bus 800, then the CPU 103 executes the program stored in the ROM 104, searches a vacant area from the FSL of the file stored in the RAM 101,generates the command for recording the file to the searched vacant area and transfers the command to the bus 800 from the DPRAM 102. When the command for reproducing a certain file on the FSL is supplied to the DPRAM 102, the CPU 101 executes the program stored in the ROM 104 in the same way, and searches the designated file based on the FE and the RE of the file system stored in the RAM 101. Furthermore, the reproduce command including address information is made, and is supplied from the DPRAM 102 to the bus 800. Accordingly, any recorded file on the HD is able to be reproduced based on this address information.

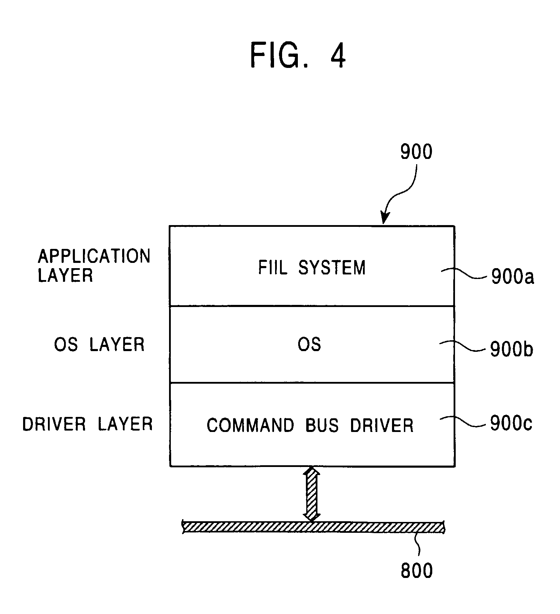

Fig. 4 shows a hierarchical software structure of the file system board 100. A software hierarchy 900 comprises 3 hierarchical layers such as a driver layer, an OS layer and an application layer aligned from a physical layer side, and a file system 900a, an OS 900b and a command bus driver 900c are respectively installed in the application layer, the OS layer and the driver layer as shown in Fig. 4.

The file system 900a manages the FE, the RE and the FSL of the hard disc array unit 700, the OS 900b offers a necessary API (Application Programming Interface) to the application layer and the command bus driver 900c executes communication interface between the software hierarchy 900 and the command bus 800.

### [Network Board 200]

A network board 200 mainly comprises of a network I/F, a command bus I/F and a backbone I/F. The network board 200 executes a command between the network 10 and the hard disc array unit 700, a transfer control of video data and a format conversion processing of the video data.

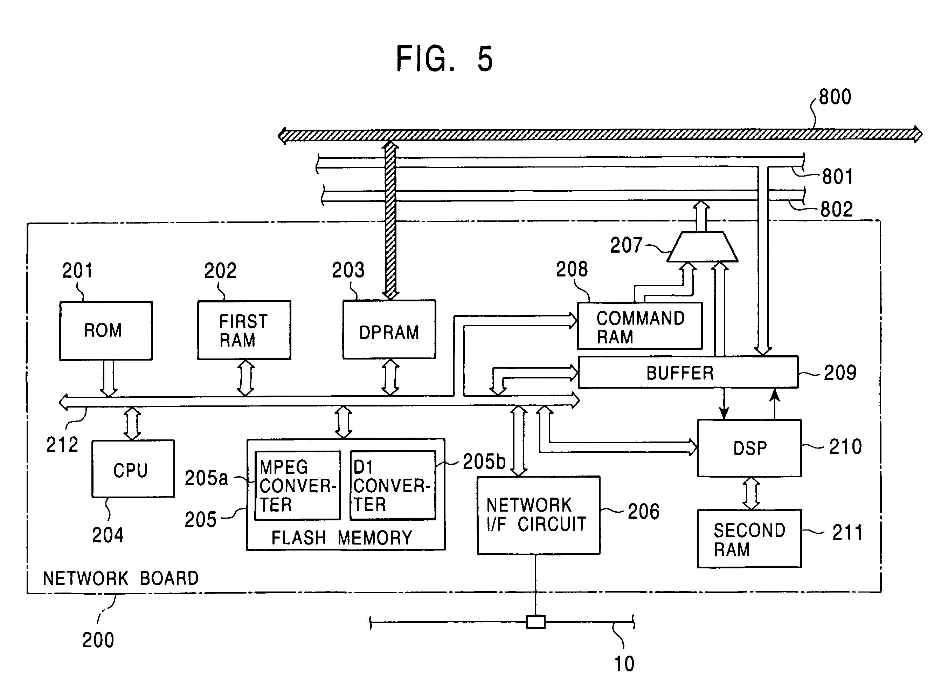

Fig. 5 shows a constitution of the network board 200. The network board 200 contains a ROM 201 for storing predetermined application program and operating system software, a first RAM 202 for work area and a DPRAM 203 for a command input/output. Further the network board 200 contains a CPU 204 for executing the predetermined application program and the operating system software to control the operation of the board and a flash memory 205 for storing in a rewritable form a converter program for data conversion (MPEG converter 205a and D1 converter 205b). The network board 200 further has a network I/F circuit 206 for interfacing to the network 10, a selector 207 for selecting output data to the backbone 802, a command RAM 208 for storing the output data to be supplied to the backbone 802 up to a predetermined output timing and a buffer 209 for storing input video data from the backbone 801 and output video data to the backbone 802. The network board 200 further includes a DSP (Digital Signal Processor) 210 for executing selectively the converter program stored in the flash memory 205 and executing the format conversion of the video data stored in the buffer 209, a second RAM 211 for offering work area to the DSP 210 and an internal bus 212 to connect each part of above described. The network board 200 executes a command and a transfer control function for the video data between the network 10 and the hard disc array unit 700 and executes, in addition, a format conversion processing function for the video data.

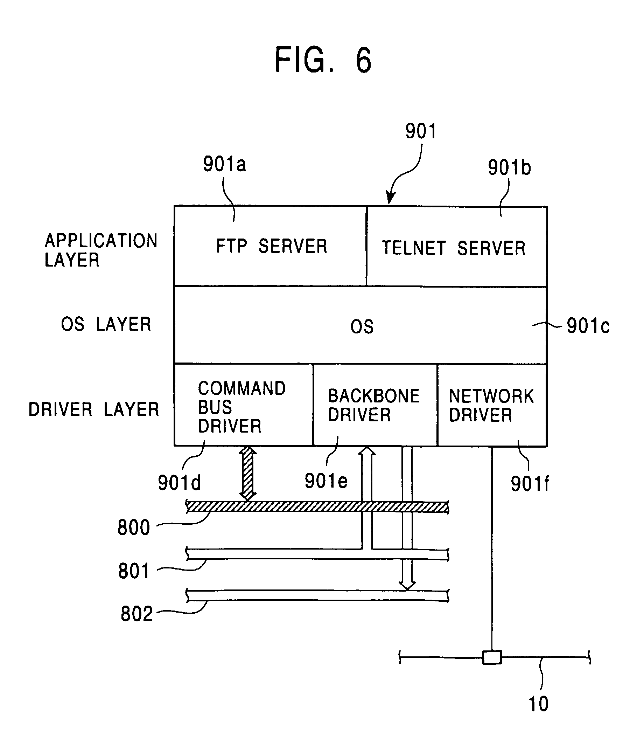

Fig. 6 shows a hierarchical software structure of the network board and a software hierarchy 901 comprises of 3 hierarchical layers such as a driver layer, an OS layer and an application layer from a physical layer side. A FTP server 901a, a Telnet server 901b, an OS901c, a command bus driver 901d, a backbone driver 901e and a network driver 901fc are respectively installed as shown in Fig. 6.

In particular the FTP (File Transfer Protocol) server 901a is a kind of file server service corresponding to the network based on the TCP/IP (Transmission Control Protocol/Internet Protocol). The FTP server 901a executes a management of a directory (Public Directory) that is open to public, an generation of the public directory, deletion or renaming of the public directory and an authentication processing for the public directory. The FTP server 901a further offers a transfer service to a terminal of an arbitrary file in the public directory and a storing or overwriting service of a transfer file from the terminal to the public directory. In case of using the FTP server 901a, the network driver 901f and the protocol of the network 10 have to support the TCP/IP.

A Telnet (Telecommunication Network) server 901b realizes a remote virtual terminal function (RFC 854) which is one of the application protocol of the TCP/IP. By applying this remote virtual terminal function, a remote machine (the terminal 11 in Fig. 25 in this case of this example) can remote-control a local machine (the hard disc array unit 700) at command base. In case of using the Telnet server 901b, the network driver 901f and the protocol of the network 10 have to support the TCP/IP.

The OS 901c offers necessary API to the application layer. The command bus driver 901d executes a communication interface to the command bus 800. The backbone driver 901e executes a communication interface to the backbone 801, 802. Furthermore, the network driver 901f executes a communication interface to the network 10.

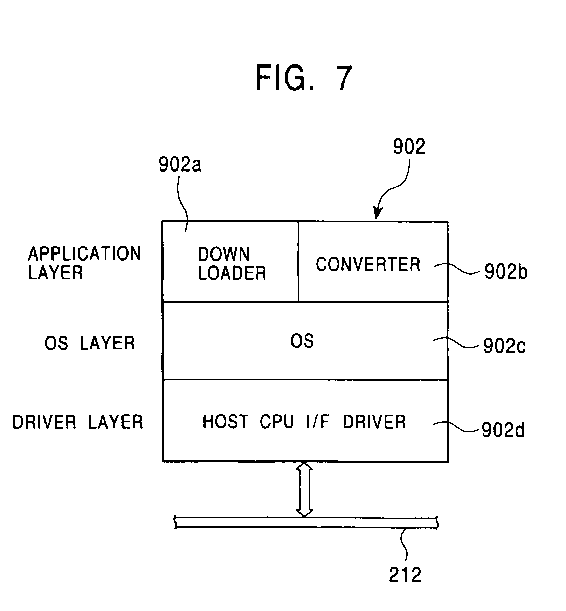

Fig. 7 shows a hierarchical software structure of the DSP 210 on the network board 200. A software hierarchy 902 comprises of 3 hierarchical layers such as a driver layer, an OS layer and an application layer aligned from a physical layer side. A down loader 902a, a converter 902b, an OS 902c and a host CPU-I/F driver 902d are respectively installed as shown in Fig. 7.

The down loader 902a stores the converter program (either the MPEG converter 205a or the D1 converter 205b stored in the flash memory 205) transferred from the host CPU (Central Processing Unit 204 connected through an internal bus 212) into a second RAM 211 and the down loader 902a executes the converter program. The converter 902b is the converter program itself stored in the second RAM 211. The operating system 902 offers necessary API for the application layer, and the host CPU-I/F driver 902d executes a communication interface to the host CPU.

### [Data Control Board 300, 400 for the MPEG Format]

Each of a data control board 300, 400 for the MPEG Format comprises of a command bus I/F, a backbone I/F, a SDI-I/F or the like. This data control boards 300 and 400 execute transfer control of the MPEG data between the input-output channels 2 and 3 (or 4 and 5) of a SDI (Serial Digital Interface) and the hard disc array unit 700.

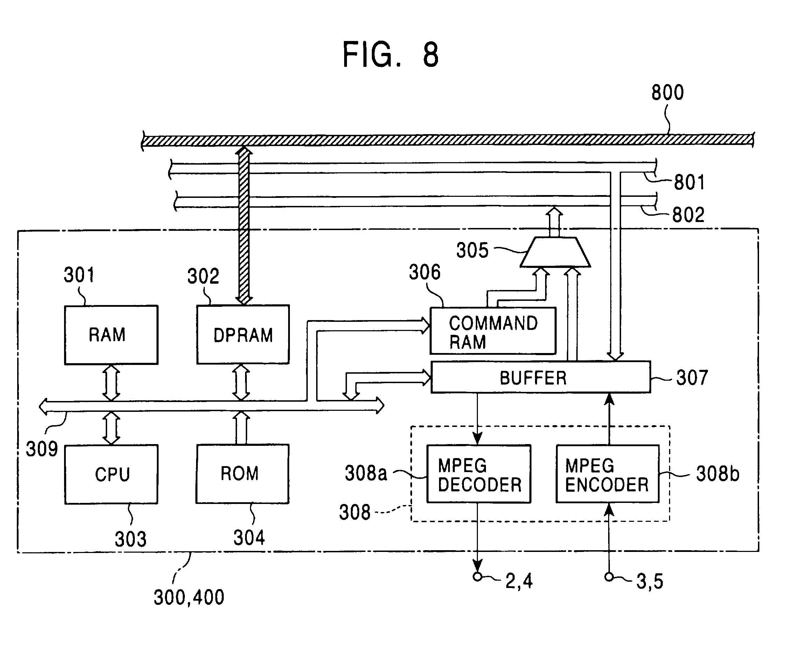

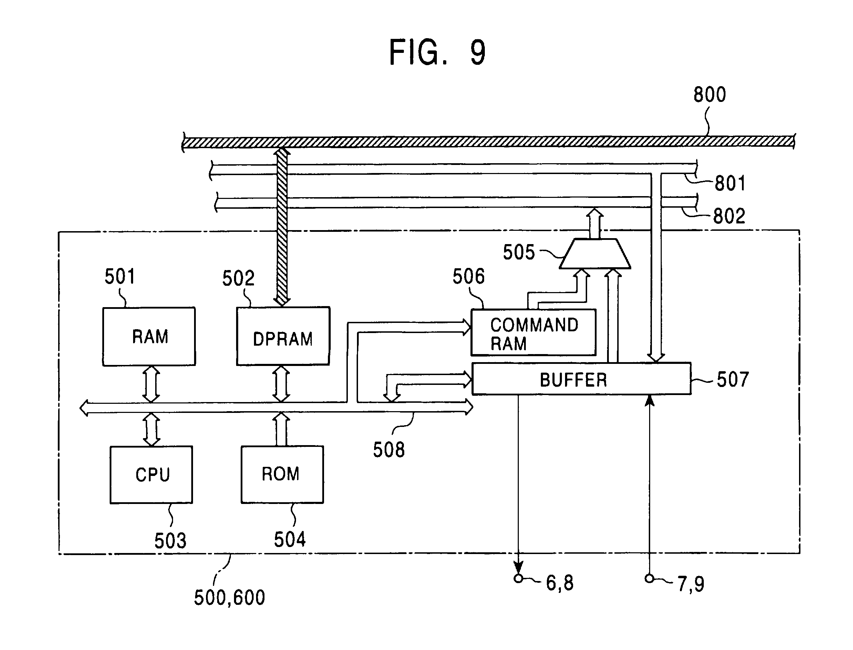

Fig. 8 shows a hardware construction of the data control board 300, 400 for the MPEG format. The data control board 300, 400 for the MPEG format comprises a RAM 301 for work area, a DPRAM 302 for command input/output, a CPU 303 for executing an OS and an application program to control the board and a ROM 304 for storing the OS and the application program software. Furthermore, the data control board 300, 400 for the MPEG format comprises a selector 305 for selecting output data to the backbone 802, a command RAM 306 for temporary storing the command data to be supplied to the backbone 802 up to a predetermined output timing. Furthermore, the data control board 300, 400 comprises a buffer 307 for storing input video data from the backbone 801 and output video data to the backbone 802 and an encoder/decoder 308. The encoder/decoder 308 comprises the MPEG decoder 308a for decompressing the MPEG compressed video data temporary stored in the buffer 307 and for supplying thus decompressed video data to outside through the channel 2 (or 4) and the MPEG encoder 308b for compressing by the MPEG compression format the video data supplied through the channel 3 (or 5) to the buffer 307.

The data control board 300, 400 for the MPEG format realizes transfer control function of the video data (particularly the MPEG data) between the input/output channel 2, 3 (or4, 5) and the hard disc array unit 700.

### [Data Control Board 500 ,600 for the D1 Format]

A data control board 500, 600 for the D1 format also comprises of a command bus I/F, a backbone I/F, a SDI-I/F or the like, and data of the SDI (Serial Digital Interface : standardized as the SMPTE 259M) format is supplied through the input-output channels 6 and 7 (or 8 and 9).

Fig. 9 shows a hardware construction of the data control board 500, 600 for the D1 format. The data control board 500, 600 for the D1 format comprises a RAM 501 for work area, a DPRAM 502 for the command input/output, a CPU 503 for executing an OS and an application program software to control operation of the board and a ROM 504 for storing the OS and the application program software. The data control board 500, 600 further comprises a selector 505 for selecting output data to the backbone 802, a command RAM 506 for temporary storing the command data to be supplied to the backbone 802 up to a predetermined output timing and a buffer 507 for storing input video data supplied from the backbone 801 and output video data to be supplied to the backbone 802. This data control board 500, 600 for the D1 format differs from the data control board 300, 400 for the MPEG format at the point that the board does not include the encoder/decoder 308.

The data control board 500, 600 for the D1 format realizes a transfer control function of the video data (data of the D1 format) between the hard disc array unit 700 and the input/output channel 6, 7 (or 8, 9).

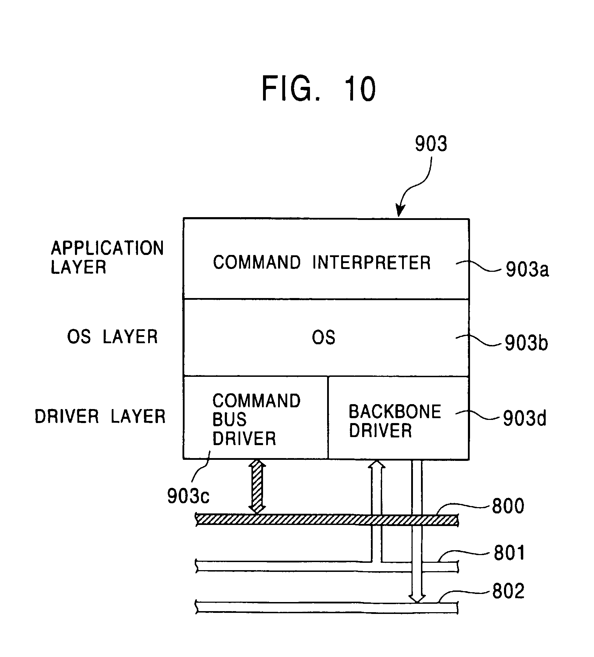

Fig. 10 shows a hierarchical software structure common to respective data control board 300, 400 for the MPEG format and the data control board 500, 600 the D1 format. A software hierarchy 903 shown in the figure comprises 3 layers including a driver layer, an OS layer and an application layer aligned from a physical layer side. A command interpreter 903a, an OS 903b, a command bus driver 903c and a backbone driver 903d are installed in those layers.

The command interpreter 903a executes the application program loaded into the RAM 301 (501) from the ROM 304 (504) while converting into the object program and realizes described functions in the application program. Needless to say, if the application program is a compiled object program, the command interpreter 903a is not necessary and the object program is installed instead of the command interpreter 903a in the application layer. The OS 903b offers necessary API to the application layer, the command bus driver 903c executes communication interface to the command bus 800 and the backbone driver 903d executes communication interface to the backbone 801, 802.

### [Hard Disc Array Unit 700]

The hard disc array unit 700 is a hard disc system of so-called RAID (Redundant Array of Inexpensive Disc) configuration. The hard disc array unit 700 realizes storage of large quantity of subject matters of broadcast programs, real time operation by increasing transfer rate for broadcast subject matter, and extended freedom. A record format of the recorded data is the D1 format (Fig. 27A) or the MPEG format (Fig. 27B) as mentioned before.

### [Command Bus 800 and Backbone 801, 802]

The command bus 800 is a transfer path for the command data being exchanged among the file system board 100, the network board 200 and the data control board 300, 400, 500, 600. The backbone 801, 802 is a transfer path for the video data exchanged among the hard disc array unit 700, the file system board 100, the network board 200 and the data control board 300, 400, 500, 600.

The backbone 801, 802 is divided into two circuits for writing to the hard disc array unit 700 (the backbone 801) and for read-out from the hard disc array unit 700 (the backbone 802). This is so constructed in order to prevent data collision (batting) of read/write operation. In addition, each data control board 300, 400, 500 and 600 repeatedly occupies the backbone 801, 802 in synchronism with the time slot signal in time divisional manner and accordingly access competition to the hard disc array unit 700 is avoided. In other words each data control is admitted the access to the hard disc array unit 700 within allocated time slot duration, thereby competition of bus at the backbone 810, 802 is avoided. Thereby the AV server 200 realizes simultaneous input/output for the plural channels.

The operation of this AV server 20 is explained next. The record/reproduce operation of the AV server 20 of this embodiment is also divided into four cases as same as the conventional AV server 1 explained before. The first two cases are cases for record/reproduce operation of the AV server 20 in response to a command from the terminal as shown in Fig. 26A and Fig. 26, wherein the terminal 11 only executes generation of a command (Command of the Telnet), designation of the input-output channel 2-9 and designation of the file. However, access to the broadcast subject matter is not done. The rest of cases are cases for direct transfer operation between the terminal 11 and the AV server 20 as shown in Fig. 26C and Fig. 26D. In this case, the format of the transfer data is the RGB format (Fig. 28) and the transfer protocol is the FTP.

### [File System Processing]

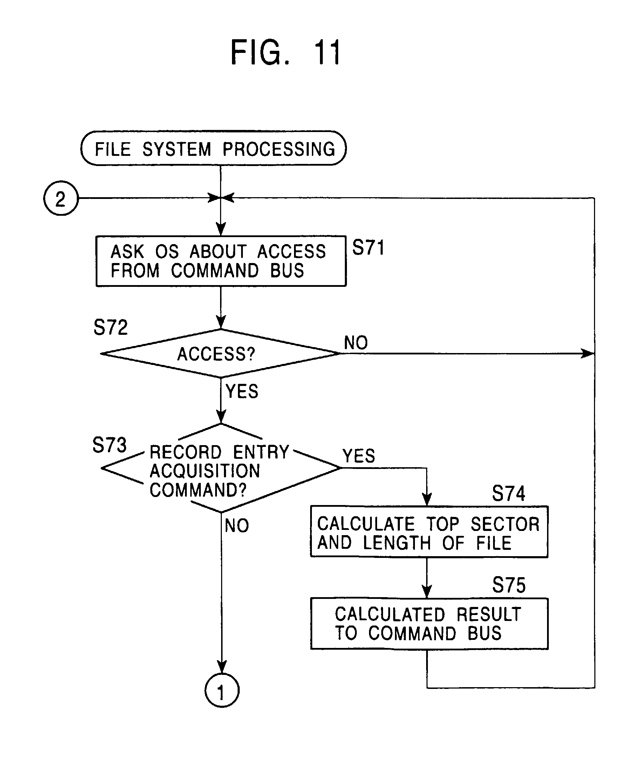

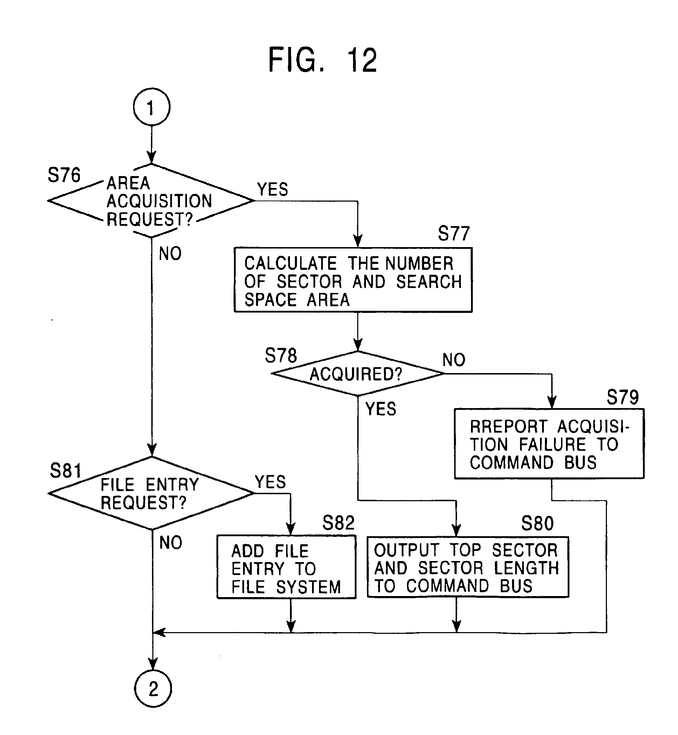

At first, the file system processing executed at the file system board 100 in all cases is explained. Fig. 11 and Fig. 12 are flow charts of the file system processing. After the processing starts, an inquiry is done to the OS 900b about access from the command bus 800 at step S71, and presence of access is judged at step S72. If there is no access, the processing returns to step S71. If there is an access here, the processing goes to step S73, and it is judged whether it is an acquisition command of a record entry. In case of acquisition command of a record entry, a top sector and a sector length of the sector for the given file name is calculated at step S74. Then at step S75, the calculation result is transferred to the command bus 800 through the OS 900b and the command bus driver 900c, then the processing returns to step S71. When it is not acquisition command of a record entry at step S73, it is judged whether it is an area acquisition command at step S73. In case of the area acquisition command at step 76, necessary number of sectors is calculated based on the quantity of the acquisition command at step S77 and then presence of capacity space (capacity space on FSL) equivalent to thus calculated number of the sector is judged at step S78. If the acquisition of the capacity space is failed, the failure of acquisition is output to the command bus 800 through the OS 900b and the command bus driver 900c at step S79 and then the processing returns to step S71. And when the capacity space is available, information of the length of the top sector and the length of the following sector is output to the command bus 800 through the OS 900b and the command bus driver 900c at step S80 and then the processing returns to step S71.

If it is not an area acquisition command at step S76, it is judged whether it is a generation command of a file entry at step S81. When it is not a generation command of a file entry at step S81, the processing returns to step S71. On the contrary when it is generation command of a file entry, then a file entry of the given file name is made and additionally registered to the file system 900a at step S82, then the processing returns to step S71.

In this way in the file system processing of the figure, the acquisition of a record entry for the hard disc array unit 700 in response to access from the command bus 800, area acquisition and the generation of the file entry are executed. Further the result of the acquisition of a record entry, the result of area acquisition and the result of the generation of the file entry are supplied to the command bus 800. Thereby the physical file position information of the hard disc array unit 700 can be converted into a logical file position information that is able to be handled in a user environment in this file system.

### [Telnet Server Processing]

The Telnet server processing necessary for two cases as shown in Fig. 26A and Fig. 26B is explained next. These cases are the cases where record/reproduce operation is executed in response to a command from the terminal 11. The command from the terminal 11 is accepted at the network board 200, and record/reproduce operation corresponding to the command is executed. In other words the AV server 20 uses one of the input/output channels 2-9, and records the video data in the hard disc array unit 700, or the AV server 20 reads the video data from the hard disc array unit 700 for reproduction.

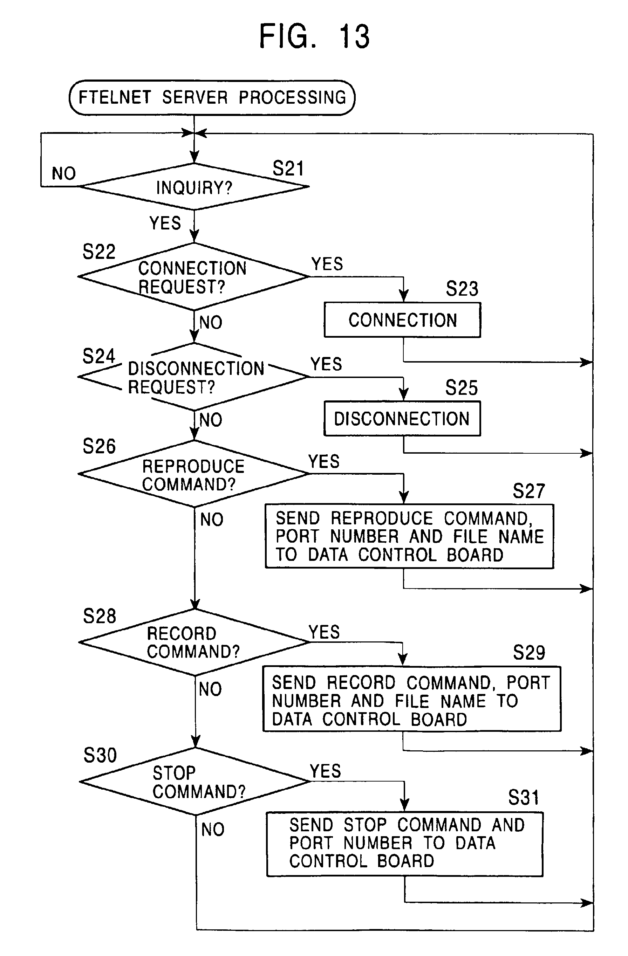

Fig. 13 shows a flow chart for the Telnet server processing, and this processing is executed at the network board 200. At first the network 10 is monitored at step S21 and it is judged whether there is an inquiry by the Telnet command from the terminal 11. When there is an inquiry, then it is checked whether the inquiry is a connect request at step S22, a disconnection request at step S24, a reproduce command at step S26, a record command at step S28 and a stop command at step S30, respectively. If the inquiry is the stop command or is not any of them, the processing returns to step S21. And if the inquiry is one of them except the stop command, the processing corresponding to the designation is done, then the processing returns to step S21.

Namely, in case of the connect request, a connection processing to the terminal 11 (such as a negotiation processing or an authentication processing) is executed at step S23. In case of the disconnection request, the connection to the terminal is released at step S25. In case of the reproduce command, the reproduce command, the port (input/output channel) number and the file name are supplied to the data control board (one of the data control board 300, 400, 500 or 600) having the port number appointed through the command bus 800 at step S27. In case of the record command, the record command, the port (input/output channel) number and the file name are supplied to the data control board (one of the data control board 300, 400, 500 or 600) having the port number appointed through the command bus 800 at step S29.

### [Command Interpreter Processing]

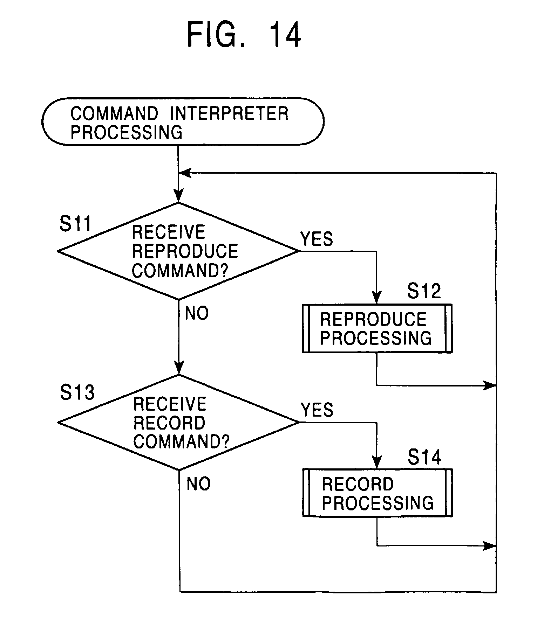

Fig. 14 shows a flow chart of command interpreter processing at the data control board 300, 400, 500 and 600 which accept either the record command or the reproduce command mentioned above. The command interpreter 903a judges a classification of the command at step S11 and step S13. When the reproduce command is received, the reproduce processing is executed at step S12. When the record command is received, the record processing is executed at step S14.

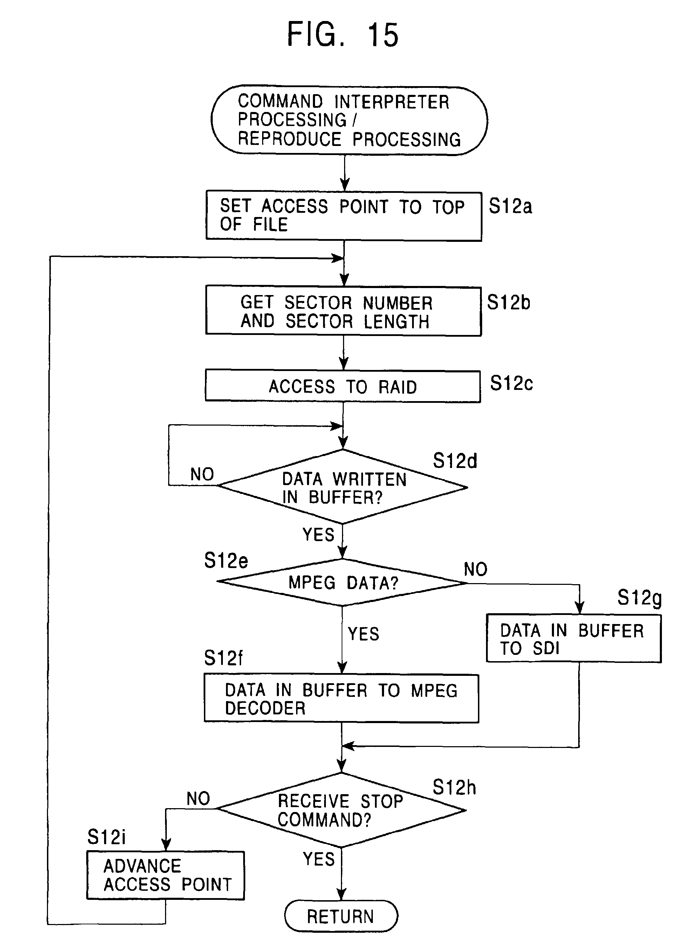

Fig. 15 shows a flow chart of a sub-routine program for a reproduce processing (cf. step S12 of Fig. 14) in the command interpreter processing. At first, in this flow chart, a pointer is set to top of file at step S12a. Then at step S12b, an acquisition request for a record entry is supplied to the file system board 100 through the command bus 800, and the sector number and the length at the access point of the file are obtained. Further at step Sl2c, a read-out command, the sector number and the length of the sector are written in the command RAM 306 (or 506) next. Furthermore, the hard disc array unit ("RAID") 700 is accessed through the backbone 802 to read the requested file data, and then thus read out data is set in the buffer 307 (or 507).

Then completion of file data set to the buffer 306 (or 507) is judged at step S12d. If it is completed, then it is judged whether the data set in the buffer 307 (or 507) at step S12e is the MPEG data. And, in case of the MPEG data at step S12e, the data in the buffer 307 is supplied to the MPEG decoder 308a at step S12f. On the contrary when it is not the MPEG data (namely the D1 data), the data in the buffer 507 is supplied to the output channel 6 (or 8). When the MPEG data is reproduced, the channel of the data control board 300, 400 for the MPEG data are appointed. On the contrary, when the D1 data is reproduced, the channel of the data control board 500, 600 for the D1 data are appointed. And it is judged whether a stop command is received at step S12h. The pointer is advanced by one at step S12i when the stop command is not received and the processing followed after step S12b is repeated. When the stop command is received, the processing is finished.

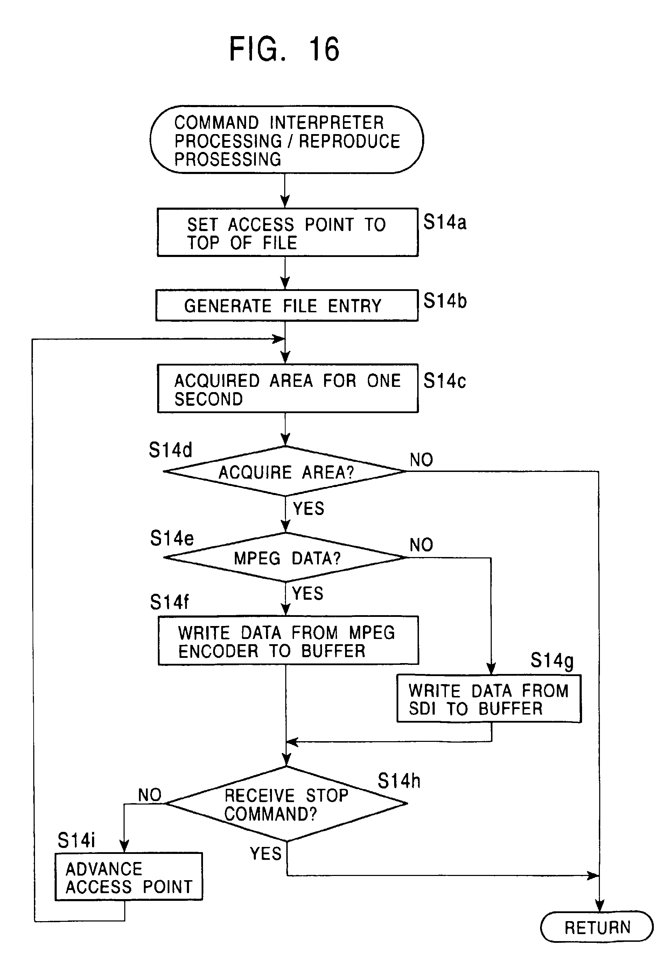

Fig. 16 is a flow chart of a subroutine program of a record processing in the command interpreter processing (cf. step S14 of Fig. 14). At first, in this flow chart, the pointer is set to a top of file at step S14a. At step S14b, an generation request of a file entry is supplied to the file system board 100 through the command bus 800. Then at step S14c, an area acquisition request is supplied to the file system board 100 through the command bus 800, and the area of the requested capacity (for example, area for one second) is acquired. Then area acquisition is waited for at step S14d next, and after area acquisition is completed, it is judged whether the data set to the input channel (either of the input channel 3, 5, 7 or 9) is the MPEG data at step S14e. And, in case of the MPEG data, data encoded at the MPEG encoder 308b is written in the buffer 307 at step S14f. On the contrary when it is not the MPEG data (in case of the D1 data), the data set to the input channel (either channel input 7 or 9) is written in the buffer 507 at step S14g. And it is judged whether a stop command is received at step S14h and if the stop command is not received, the processing followed from step S14 are repeated after the pointer is advanced by one. When the stop command is received, the processing is finished.

In this way in the Telnet server processing of Fig. 13 and the command interpreter processing of Fig. 14 to Fig. 16, the processing for the connection to the terminal 11 or the disconnection from the terminal 11 is executed in response to the inquiry from the terminal 11 through the network 10. Furthermore, if the inquiry is the reproduce command, the designated file in the hard disc array unit 700 is supplied to the outside using one of the output channel 2, 4, 6 or 8 of the AV server 20. In addition, if the inquiry is the record command, the designated file from the outside is recorded into the hard disc array unit 700 using one of the input channels 3, 5, 7 or 9 of the AV server 20

### [FTP Server Processing]

An FTP server processing for two cases as shown in Fig. 26(c) and Fig. 26(d) is explained next. In these cases as stated above, a file is exchanged between the terminal 11 and the AV server 20. In addition, the format of the file to be exchanged is the RGB format, and the RGB format is different from the data format (the D1 format or the MPEG format by compressing the D1 format) of the hard disc array unit 700.

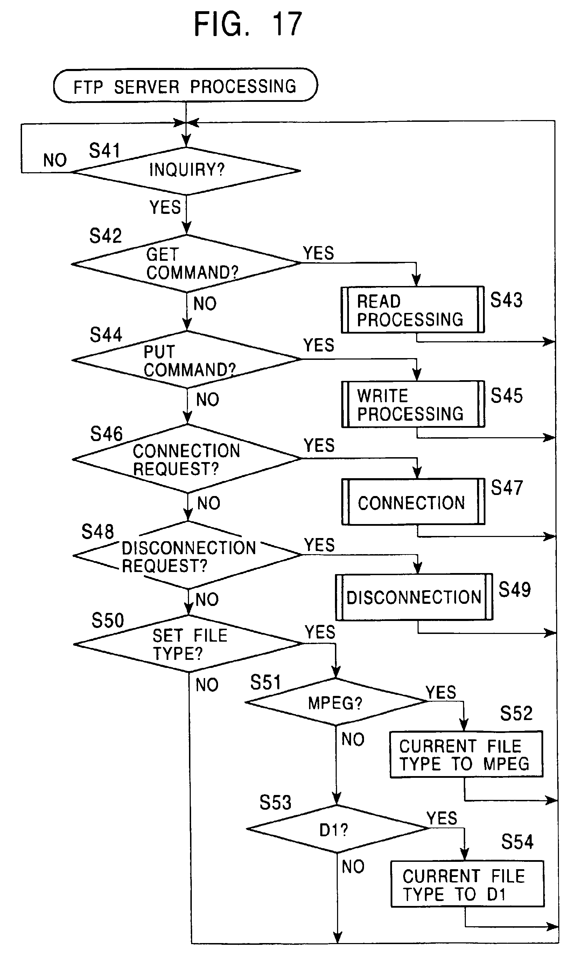

Fig. 17 shows a flow chart of the FTP server processing, and this processing is executed at the network board 200. At first the network 10 is checked at step S41, and the processing judges whether there is an inquiry by the FTP command from the terminal 11. And if there is an inquiry, the inquiry is checked whether the inquiry is a Get command at step S42, a Put command at step S44, a connection request at step S46, a disconnection request at step S48 or a set of file type at step S50. When neither is fallen under, the processing returns to step S41. Otherwise after the corresponding processing is executed, the processing returns to step S41.

In other words, in case of the Get command, the read-out processing is executed at step S43. In case of the Put command, the write processing is executed at step S45. In case of the connection request, a connection to the terminal 11 (a negotiation processing or an authentication processing) is executed at step S47. In case of the disconnection request, the disconnection from the terminal 11 is executed at step S49. In case of the setting the file type, the file type (the MPEG Format or the D1 Format) is set as the current file type at step S51 to step S54.

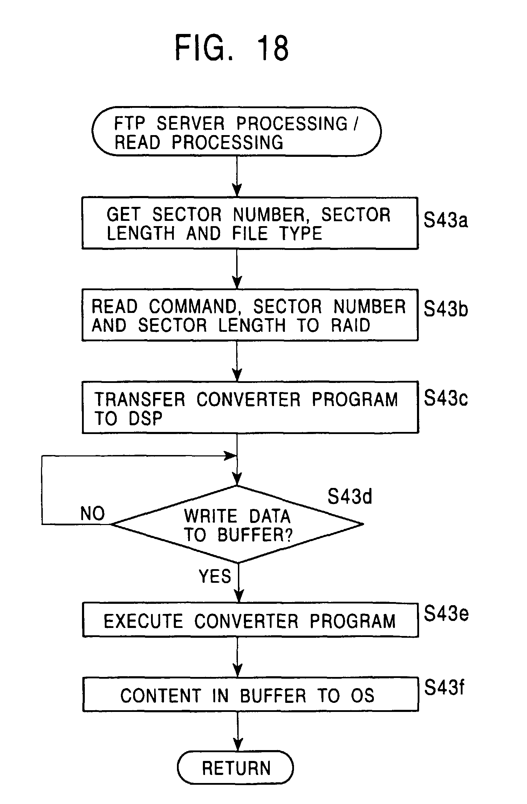

Fig. 18 shows a flowchart for a sub-routine program of the read processing in the FTP server processing (cf. step S43 of Fig. 16). At first, in this flow chart, the acquisition request of a record entry is supplied to the file system at step S43a and the sector numbers for the extent of the file, the sector length and the file type are obtained. Then the transfer request is supplied to the DSP 210. Simultaneously after the read command, the sector number and the sector length are supplied to the hard disc array unit 700 (RAID) at step S43b, the converter program accorded with the file type is taken out from the flash memory 205a by supplying converter transfer command, and thus obtained converter program is supplied to the DSP 210 at step S43c. The read-out data from the hard disc array unit 700 is written in the buffer 209 at step S43d. After that the execute command is supplied to the DSP 210 at step S43e and the DSP 210 executes the converter program (later down loader processing is referred to). Thereby the data written in the buffer 209 is converted into the RGB format. Finally the data (the data converted into the RGB format) in the buffer 209 is transferred to the OS 901c at step S43f then transferred to the terminal 11 through the network driver 901f and the network 10.

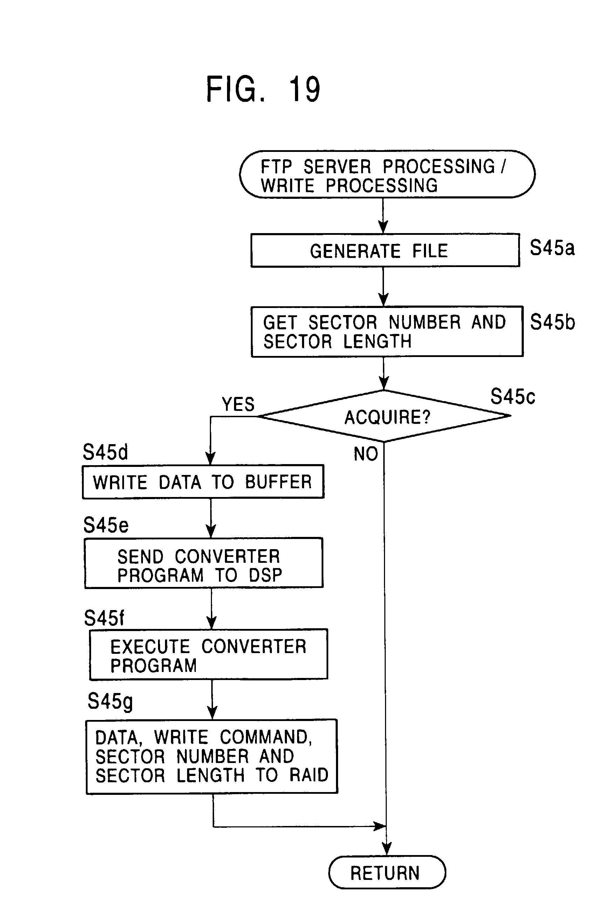

Fig. 19 is a flow chart of a subroutine program of the write processing in the FTP server processing (cf. step S45 of Fig. 17). At first, at step S45a, a generation command of a file entry is supplied to the file system 900a, and a file is made. Subsequently, at step S45b, the area acquisition command is supplied to the file system 900a, and the sector number and the sector length of the acquisition area are obtained. Subsequently consequence of the area acquisition is judged at step S45c. When the area acquisition is not done, the program is finished. On the contrary when the area acquisition is enacted, the file data from the network 10 is written in the buffer 209 at step S45d, Subsequently the transfer command is supplied to the DSP 210 at step S45e.
At the same time the converter program accorded with the file type (MPEG or D1) is taken out from the flash memory 205 and forwarded to the DSP 210. Subsequently the execute command is supplied to the DSP 210 at step S45f, and the converter program is executed at the DSP 210. The data written in the buffer 209 is converted into the MPEG or the Dl format. Finally the sector data after the format conversion, the write command and the number and the length of the sector are supplied to the hard disc array unit 700 at step S45g.

### [Down Loader Processing]

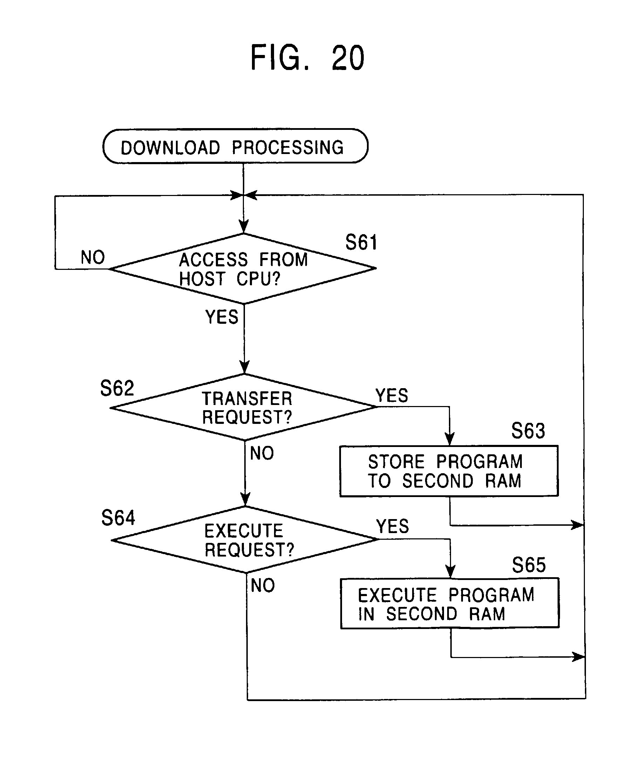

Fig. 20 shows a flowchart for the download processing executed in the DSP 210 on the network board 200. This program detects an access from the host CPU (CPU 204 of the network board 200) at step S61, and if there is an access, the processing goes to step S62. It is judged at step S62 whether it is a transfer request. If it is not the transfer request, then it is judged at step S64 whether it is an execute request.

In case of the transfer request at step S62, the converter program (MPEG converter 205a or D1 converter 208b) forwarded from the flash memory 205 is stored in the second RAM 211 at step S63. In case of execute request at step S64, the converter program in the second RAM 211 is executed at step S65. When it is not the execute request at step S62 and the processing at steps S63 and S65 is finished, then the processing returns to step S61 to repeat the above processing.

### [Total System Operation including the AV server 20]

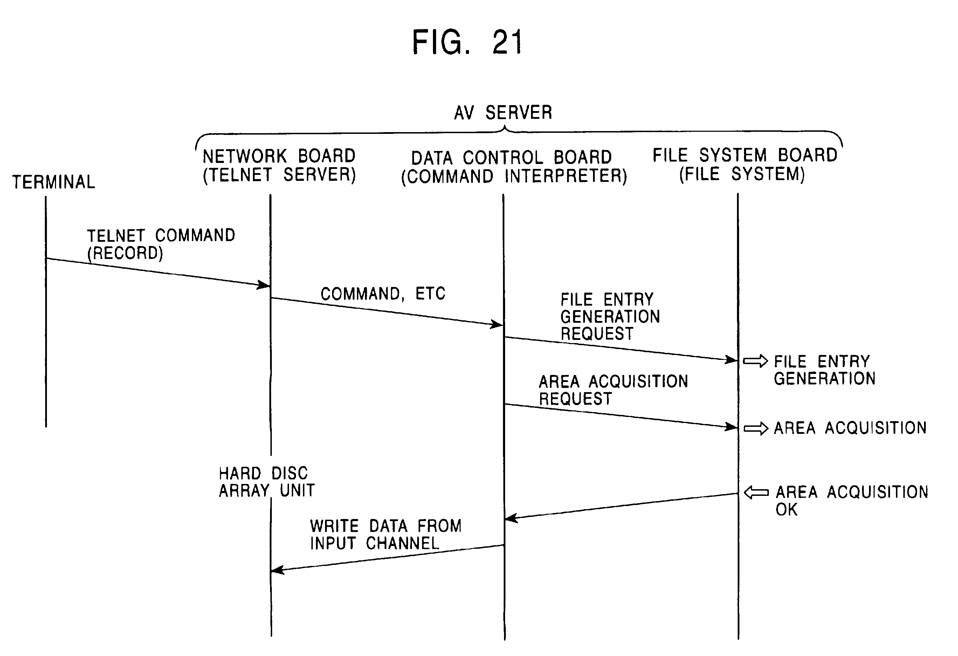

Fig. 21 shows a time run chart for the data record corresponding to the embodiment of this invention as shown in Fig. 26A. At first the Telnet server 901b of the network board 200 is called from the terminal 11, and then the record command, the port (input channel) number and the file name are transferred to the Telnet server 901b as shown in Fig. 21.

The Telnet server 901b supplies a file entry generation request and an area acquisition request to the file system 900a of the file system board 100 through the command interpreter 903a of the data control board (one of data control board 300, 400, 500 or 600. The following is temporary defined as the data control board 300) having designated the input channel in response to this record command. The file system 900a generates the file entry, acquires the requested area and sends back the result to the command interpreter 903a. The command interpreter 903a writes in the acquisition area of the hard disc array unit 700 the data taken in the buffer 307 from the designated channel 3 through the MPEG encoder 308b.

Accordingly the data of the broadcast subject matter is written in the hard disc array unit 700 using arbitrary input channel 3, 5, 7 or 9 of the AV server 20 (installed on the network board 200) utilizing the Telnet server 901b of the AV server 20 from the terminal 11, thereby record operation as shown Fig. 26A can be realized.

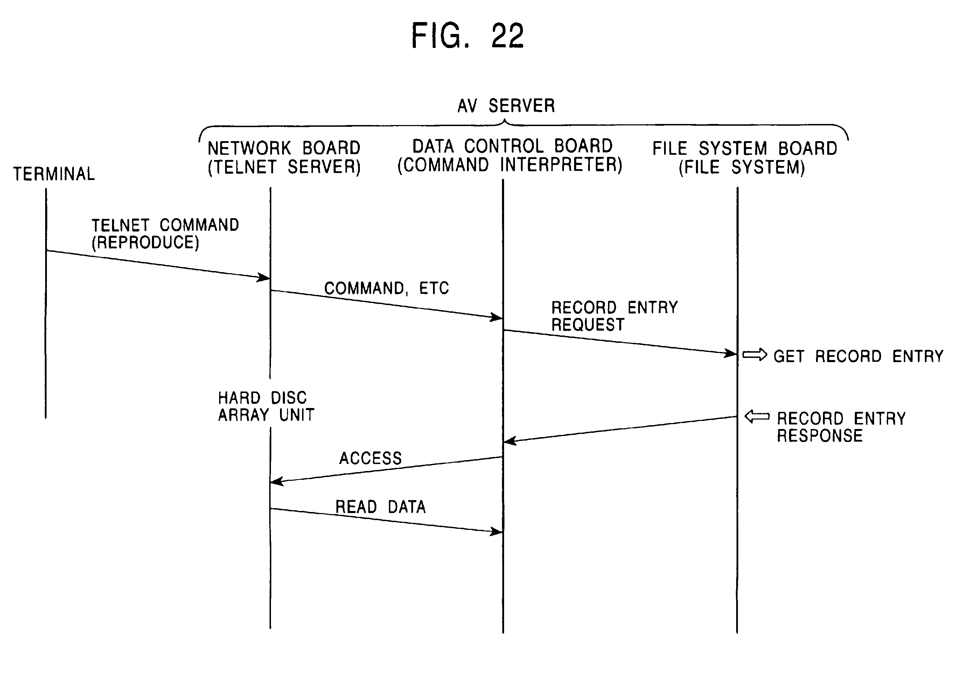

Fig. 22 shows a time run chart for data reproduce corresponding to the embodiment of this invention as shown in Fig. 26B. At first the terminal 11 accesses the Telnet server 901b of the network board 200 as shown in Fig. 22 and supplies the reproduce command, the port (input channel) number and the file name to the Telnet server 901b. In response to this command, the Telnet server 901b supplies to the file system 900a of the file system board 100 through the command interpreter 903a of the data control board (one of data control board 300, 400, 500 or 600. The following is temporary defined as the data control board 300) having designated the input channel. Then the file system 900a acquires a required record entry and send it back to the command interpreter 903a. The command interpreter 903a accesses the hard disc array unit 700 using the record entry, reads the data and supplies the same to the buffer 307. At the same time, for example, through the MPEG decoder 308a and designated output channel 2, the data is supplied to a broadcasting machine for broadcast. Accordingly the terminal 11 accesses the hard disc array unit 700 utilizing the Telnet server 901b of the AV server 20 (installed in the network board 200), reads the data therefrom and supplies thus read out data through any of the output channels 2, 4, 6 or 8. Accordingly the reproduce operation as shown in Fig. 26B is executed.

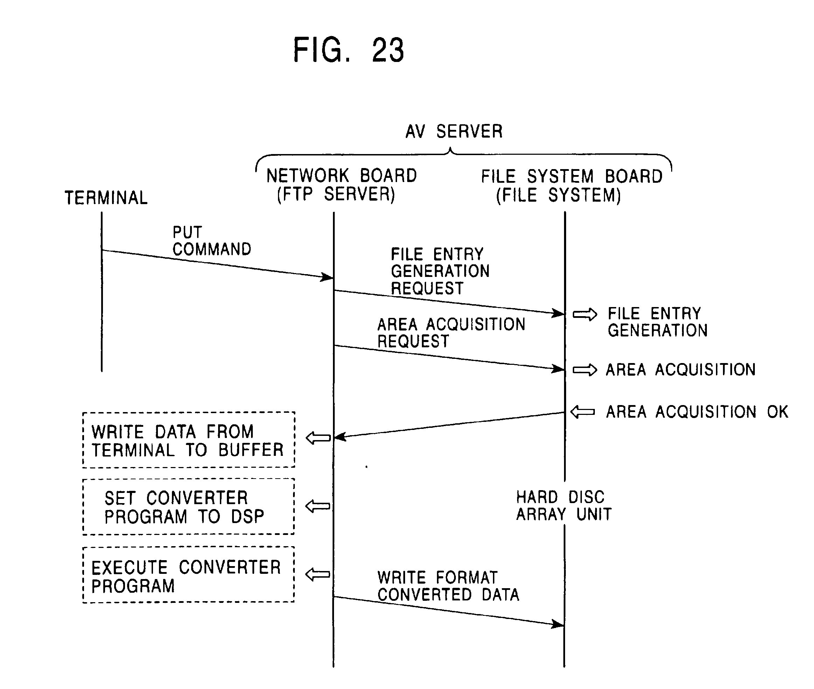

Fig. 23 shows a time run chart for data write corresponding to the embodiment of this invention as shown in Fig. 25C. At first, the FTP server 901a of the network board 200 is called from the terminal 11 in Fig. 23. The FTP server 901a supplies the file entry generation request and the area acquisition request in the file system 900a of the file system board 100. The file system 900a generates the file entry, acquires the requested area and sends it back to the FTP server 901a. The FTP server 901a writes the data forwarded from the terminal 11 to the buffer 209. At the same time the FTP server 901a sets the converter program (either the MPEG converter 205a or the D1 converter 205b stored in the flash memory 205) to the DSP 210. Then the format conversion is done to the data stored in the buffer 209 by the DSP 210. After that the FTP server 901a writes the format-converted data to the acquisition area of the hard disc array 700. Accordingly the data forwarded from the terminal 11 can be record in the hard disc array unit 700 by utilizing the FTP server 901a implemented on the network board 200 of the AV server 20 by the control from the terminal 11. As a result the writing operation as shown in Fig. 25C can be realized. Furthermore, in case of this writing operation, the format (the RGB format) of the data forwarded from the terminal 11 is converted into the data format (the D1 or the MPEG format) of the hard disc array unit 700. Accordingly a general-purpose personal computer or a workstation can be used for the terminal 11. Besides, the converter program is transferred to the flash memory 205 and rewritably stored, so that the terminal 11 and the hard disc array unit 700 can be easily corresponded to the change of format to be handled.

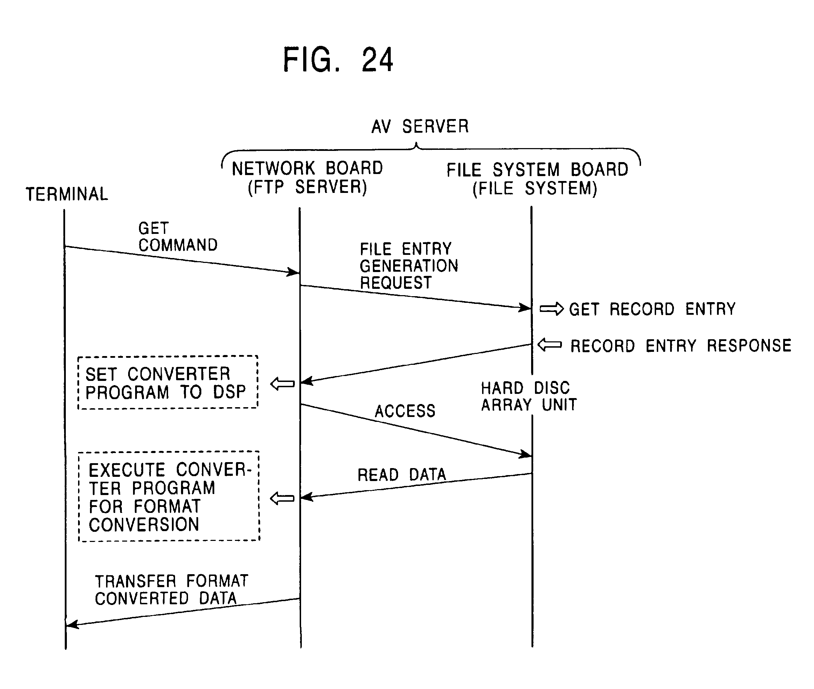

Fig. 24 shows a time run chart for the data read corresponding to the embodiment of the present invention as shown in Fig. 25D. At first, the FTP server 901a of the network board 200 is called from the terminal 11 in Fig. 24. The FTP server 901a supplies the record entry acquisition command to the file system 900a of the file system board 100. The file system 900a acquires the record entry, and sends it back to the FTP server 901a. The FTP server 901a sets the converter program (the MPEG converter 205a or the D1 converter 205b stored in the flash memory 205) to the DSP 210. And the FTP server 901a accesses the hard disc array unit 700 using the record entry sent back from the file system 900a and the read-out data is written in the buffer 209. At the same time the format conversion is executed by the DSP 210 using the converter program stored in the buffer 209 and the format converted data is forwarded to the terminal 11 afterwards.

Accordingly the terminal 11 executes to read-out the data of the hard disc array unit 700 by utilizing the FTP server 901a implemented in the network board 200 of the AV server 20, thereby the read operation as shown in Fig. 26D is realized. Furthermore, in case of this read-out operation, the format (the D1 format or the MPEG format) of the data read from the hard disc array unit 700 is converted into the data format (the RGB format) of the terminal 11. Accordingly, a general-purpose personal computer or a workstation can be used as the terminal 11 same as the case of the above described record operation. Besides, the converter program is rewritably stored in the flash memory 205, so that same as above record operation the AV server 20 has great flexibility to the change of the data format in the hard disc array unit 700 and the terminal 11.

The above-described embodiment is explained in a case where the hard disc system is used as recording medium of the AV server 20. However, a disc-shaped recording medium such as a MO (Magneto-Optical) disc or a DVD (Digital Versatile Disc), a flash memory or a DRAM can be used in this invention as long as the recording medium is random access type recording medium.

Although the invention has been described in its preferred form with a certain degree of particularity, obviously many changes and variations are possible therein. It is therefore to be understood that the present invention may be practiced otherwise than as specifically described herein without departing from the scope thereof.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A data recording/reproducing apparatus for recording/reproducing data on random accessible recording medium, comprising:
recording/reproducing device for recording/reproducing data on random-accessible recording medium;
a plurality of input/output processing means for supplying input data within an allocated time slot to said recording/reproducing device and for supplying reproduced data from said recording/reproducing device within said time slot to an external device; and
format conversion means interposed between said plurality of input/output processing means and recording/reproducing device for converting data format between a first data format for the data recorded on said random-accessible recording medium and a second data format in said external device.

2. A data recording/reproducing apparatus as claimed in Claim 1, wherein
said format conversion means comprises:
rewritable memory means for storing a conversion program for converting data format between said first data format and said second data format;
conversion processing means for executing said conversion program; and
control means for controlling the supply of said conversion program stored in said rewritable memory means to said conversion processing means.

3. A data recording/reproducing apparatus as claimed in Claim 1, wherein
said format conversion means is connected to a TCP/IP network to which a control terminal means is connected as said external device.

4. A data recording/reproducing apparatus as claimed in Claim 1, wherein
said input/output processing means extracts video/audio data out of the data transferred in the SDI format from said external device and thus extracted video/audio data is supplied to said recording/reproducing device within said time slot.

5. A data recording/reproducing apparatus as claimed in Claim 4, wherein
at least one of said plurality of input/output processing means comprises compression means for compressing said extracted video/audio data.

6. A method for recording/reproducing data on random-accessible recording medium by a recording/reproducing device within the allocated time slot, comprising the steps of:
step for supplying through a network a control signal for reproduce command for the data recorded on said random-accessible recording medium;
step for reproducing said data on said random-accessible recording medium within the time slot based on said control signal for reproduce command;
step for converting format of the reproduced data at said reproducing step; and
step for transferring format converted data to said network.

7. A method for recording/reproducing data on random-accessible recording medium as claimed in Claim 6, wherein
said network is a TCP/IP network to which a terminal is connected, and the data obtained at said converting step is acceptable format by said terminal.

8. A method for recording/reproducing data on random-accessible recording medium by a recording/reproducing device within the allocated time slot, comprising the steps of:
step for supplying data transferred through a network;
step for converting format of the supplied data to a format suitable for recording on said random-accessible recording medium; and
step for supplying format-converted data at said converting step to said recording/reproducing device within the allocated time slot.

9. A method for recording/reproducing data as claimed in Claim 8, wherein
said network is a TCP/IP network to which a terminal is connected, and the data is supplied from said terminal in a form of predetermined format.
